# EUROPÄISCHE PATENTSCHRIFT

(11) **EP 2 899 738 B1**
(45) Veröffentlichungstag und Bekanntmachung des Hinweises auf die Patenterteilung: **17.05.2017**
(21) Anmeldenummer: 14193571.8
(22) Anmeldetag: 18.11.2014
(51) Int. Cl.: H01H 71/02, H01H 83/02

(54) **Externe Ansteuerung eines elektromagnetischen Auslösers**
External driving of an electromagnetic trigger
Commande externe d'un déclencheur électromagnétique

(30) Priorität: 28.01.2014 DE 102014201501
(43) Veröffentlichungstag der Anmeldung: 29.07.2015
(73) Patentinhaber: Siemens Aktiengesellschaft, 80333 München (DE)
(72) Erfinder: Baumann, Mathias, 90513 Zirndorf (DE); Strassburger, Michael, 92266 Ensdorf (DE)

(56) Entgegenhaltungen:
- FR-A1- 2 440 609
- US-A1- 2001 022 713
- US-A1- 2007 236 841
- Petra Belzner ET AL: "Schalten, Schützen, Verteilen in Niederspannungsnetzen" In: "Schalten, Schützen, Verteilen in Niederspannungsnetzen", 1. Januar 1992 (1992-01-01), SIEMENS, Erlangen, XP055171458, ISBN: 978-3-80-094122-3 Seiten 466-467, * Seite 466 - Seite 467; Abbildung 8.54 *
- SIEMENS: "Fehlerstromschutzeinrichtung 3UL2", , 31. Dezember 1993 (1993-12-31), XP055193839, Gefunden im Internet: URL:https://support.industry.siemens.com/c s/attachments/.../42800323.pdf> [gefunden am 2015-06-05]
- "Montageanweisung AWA PZ4 UA", , 28. Februar 2005 (2005-02-28), XP055194010, Gefunden im Internet: URL:ftp://ftp.moeller.net/DOCUMENTATION/AW A_INSTRUCTIONS/22740205.pdf [gefunden am 2015-06-05]
- "Montageanweisung AWA Fehlerstrom-Relais Wandler für FI-Relais", , 30. November 2011 (2011-11-30), XP055194014, Gefunden im Internet: URL:ftp://ftp.moeller.net/DOCUMENTATION/AW A_INSTRUCTIONS/IL01219036Z2011_01.pdf [gefunden am 2015-06-05]

## Beschreibung

Die vorliegende Erfindung betrifft eine elektrische Schutzanordnung mit einem Leistungsschalter und einer daran angeschlossenen Fehlerstromschutzvorrichtung mit einer Detektionseinrichtung zum Detektieren eines Fehlerstroms und einer Auslöseeinrichtung, die von der Detektionseinrichtung ansteuerbar ist, wobei der Leistungsschalters in Folge der Ansteuerung durch die Auslöseeinrichtung auslöst. Die Fehlerstromschutzvorrichtung kann netzspannungsunabhängig (d.h. ohne Hilfsspannungsquelle), aber auch netzspannungsabhängig (d.h. mit Hilfsspannungsquelle) sein.

Fehlerstromschutzvorrichtungen bieten in Niederspannungsnetzen einen Fehlerschutz für den Fall, dass die Basisisolierung versagt oder spannungsführende Teile direkt berührt werden. Dadurch werden Schädigungen an Menschen, Gegenständen und Nutztieren verhindert oder reduziert,

Fehlerstromschutzvorrichtungen, also Differenzstromgeräte oder Fehlerstromgeräte bzw. -funktionen, können an übliche Leistungsschalter angebaut oder als externe, modulare Lösung realisiert sein. Alternativ können die Fehlerstromschutzvorrichtungen auch in Kompaktleistungsschalter integriert sein. Tritt im Betrieb einer Anlage dann ein Fehlerstrom auf, wird dieser durch die Fehlerstromschutzvorrichtung detektiert, und sie löst den zuständigen (Kompakt-)Leistungsschalter aus und schaltet somit die Anlage spannungsfrei.

Bei speziellen Arten von Fehlerstromschutzvorrichtungen sind als Auslöseeinrichtung sogenannte Hilfsauslöser vorgesehen. Diese Hilfsauslöser sind elektromechanische Systeme insbesondere auf Magnetbasis, mit denen aus einem Ansteuersignal in Folge eines Fehlerstroms eine Bewegung, insbesondere für ein Schaltschloss, erzeugt werden kann. Im speziellen Fall kann ein Hilfsauslöser auch als Auslösemagnet bezeichnet werden. Je nach Funktion unterscheidet man bei den Hilfsauslösern zwischen Spannungsauslösern und Unterspannungsauslösern. Spannungsauslöser lösen aus (d.h. erzeugen eine mechanische Bewegung), wenn eine Spannungsschwelle überschritten wird. Unterspannungsauslöser lösen aus, wenn eine Spannungsschwelle unterschritten wird.

Die Fehlerstromschutzvorrichtung und der Leistungsschalter sind üblicherweise in separaten Gehäusen angeordnet. Der Leistungsschalter kann ein Gehäuse besitzen, in dem eine oder mehrere Zubehörtaschen vorgesehen sind. In eine solche Zubehörtasche kann der oben erwähnte Hilfsauslöser, ein Hilfsschalter, ein Alarmschalter oder dergleichen eingesteckt werden. Mit diesem modularen Zubehör ist also eine elektrische Schutzanordnung, die einen Leistungsschalter und eine Fehlerstromschutzvorrichtung umfassen kann, individualisierbar.

Aus dem Artikel von Petra Belzner et al.: "Schalten, Schützen, Verteilen in Niederspannungsnetzen", 1. Januar 1992, (1992-01-01), SIEMENS, Erlangen, XP055171458, ISBN: 978-3-80-094122-3, Seiten 262-263 sowie den Druckschriften US 2007/236841 A1, US 2001/022713 A1 und FR 2440609 A1 sind jeweils elektrische Schutzanordnungen bekannt, die über eine Fehlerstromschutzvorrichtung und eine integrierte manuelle Auslösemöglichkeit verfügen.

Es besteht der Bedarf, die Funktion von Fehlerstromschutzvorrichtungen zu gewissen Zeitpunkten bzw. in gewissen zeitabständen zu überprüfen. Insbesondere muss auch die Auslöseeinrichtung gegebenenfalls im Zusammenspiel mit dem Leistungsschalter hinsichtlich Funktionalität überprüft werden.

Die Aufgabe der vorliegenden Erfindung besteht somit darin, eine elektrische Schutzanordnung mit Leistungsschalter und daran angeschlossener Fehlerstromschutzvorrichtung bereitzustellen, bei der auf einfache Weise auch eine Auslösung der Auslöseeinrichtung möglich ist, ohne dass ein Fehlerstrom oder Differenzstrom vorliegt.

Erfindungsgemäß wird diese Aufgabe gelöst durch eine elektrische Schutzanordnung nach Anspruch 1.

In vorteilhafter Weise ist also an der Fehlerstromschutzvorrichtung eine Anschlusseinrichtung vorgesehen, über die die Auslöseeinrichtung ansteuerbar ist. Da sowohl die Möglichkeit besteht, über die Anschlusseinrichtung die Auslöseeinrichtung auszulösen, als auch die Möglichkeit, die Auslöseeinrichtung mithilfe der Detektionseinrichtung auszulösen, ist diese parallele Auslösbarkeit in den Einrichtungen elektrisch berücksichtigt. Insbesondere ist darauf geachtet, dass das Auslösen über die Anschlusseinrichtung unabhängig von einem Auslösen mittels der Auslöseeinrichtung erfolgen kann. Speziell hat dies den Vorteil, dass eine Anzeigeeinheit der Detektionseinrichtung, die den Fehlerstromfall anzeigt, nicht aktiviert wird, wenn beispielsweise manuell über die Anschlusseinrichtung eine Auslösung erfolgt.

Die Fehlerstromschutzvorrichtung besitzt ein Gehäuse, in dem die Detektionseinrichtung zusammen mit der Anschlusseinrichtung fest angeordnet sind. Damit ist der Anschluss einer Auslöseeinrichtung, d.h. eines Hilfsauslösers, und eines externen Schaltelements zum manuellen Auslösen für den Nutzer leicht möglich.

Bei einer Ausgestaltung ist die Anschlusseinrichtung fest in die Detektionseinrichtung integriert. Dies hat den Vorteil, dass die Beschaltung der Anschlusseinrichtung in der Detektionseinrichtung elektronisch berücksichtigt werden kann und es somit möglich wird, dass die Auslöseeinrichtung nur über beispielsweise einen zweiadrigen Anschluss mit der Detektionseinrichtung verbunden ist und dennoch zwei verschiedene Auslöseereignisse (manuelle Auslösung und Fehlerstromauslösung) verarbeitbar sind.

Besonders vorteilhaft ist, wenn die Anschlusseinrichtung zwei Anschlüsse umfasst, zwischen denen im Betriebsfall ständig eine vorgegebene Spannung anliegt. Dadurch ist es möglich, mit einem so genannten "potentialfreien Kontakt" die Auslöseeinrichtung manuell beispielsweise mittels eines Tasters auszulösen. Eine Fremdversorgung des externen Schalters bzw. Tasters ist also nicht notwendig.

Dabei können die Detektionseinrichtung und die Auslöseeinrichtung so ausgebildet sein, dass die Auslöseeinrichtung durch Kurzschluss der Anschlüsse der Anschlusseinrichtung ausgelöst wird. Damit ist also, wie oben angedeutet ist, ein sehr einfacher Mechanismus (z.B. Taster) zum Auslösen der Auslöseeinrichtung einsetzbar.

Ferner kann die Auslöseeinrichtung als Spannungsauslöser ausgebildet sein. Alternativ dazu könnte die Auslöseeinrichtung als Unterspannungsauslöser ausgebildet sein. Grundsätzlich ist also die erfindungsgemäße Fehlerstromschutzvorrichtung in beiden Varianten realisierbar. Es ist dann in der Regel nur die Detektionseinrichtung entsprechend elektrisch auszustatten.

Ferner kann die Auslöseeinrichtung mit Kabeln an die Anschlusseinrichtung angeschlossen sein. Dadurch können die einzelnen Komponenten sehr einfach aufgebaut sein, was bei wenigen Modulen sicher von Vorteil ist.

Der Leistungsschalter ist in einem separaten Gehäuse angeordnet, das mit dem Gehäuse der Fehlerstromschutzvorrichtung formschlüssig verbindbar ist. Sowohl die Fehlerstromschutzvorrichtung als auch der Leistungsschalter können jeweils ein eigenes Gehäuse aufweisen, welche üblicherweise unmittelbar nebeneinander angeordnet sind. Auf diese Weise kann ein modulares System bereitgestellt werden, aus dem eine elektrische Schutzanordnung zusammengesetzt werden kann.

Das Gehäuse des Leistungsschalters weist einen Schacht bzw. eine Zubehörtasche auf, in dem/der die Auslöseeinrichtung befestigt ist. Damit ist es möglich, ein modulares System bereitzustellen, bei dem Hilfsauslöser und dergleichen eingesetzt werden.

Zudem ist die Auslöseeinrichtung als ein in das Gehäuse des Leistungsschalters einsteckbares Modul ausgebildet. Sie muss also nicht fest in dem Gehäuse verankert sein. Damit wird eine Modularität bereitgestellt, die eine erhöhte Individualisierung der aufzubauenden Anlagen garantiert.

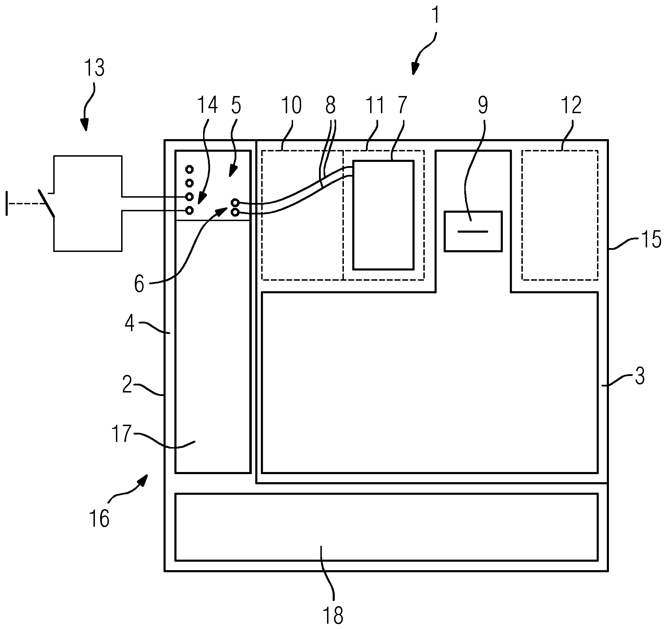

Die vorliegende Erfindung wird nun anhand der beigefügten Figur näher erläutert, die schematisch eine erfindungsgemäße elektrische Schutzanordnung mit zusätzlicher externer Ansteuerung des elektromagnetischen Auslösers wiedergibt.

Das nachfolgend näher geschilderte Ausführungsbeispiel stellt eine bevorzugte Ausführungsform der vorliegenden Erfindung dar.

Ausgangspunkt für das nachfolgende Beispiel einer elektrischen Schutzanordnung 1 ist eine Fehlerstromschutzvorrichtung 4 (RCD; residual current protective device). Die Fehlerstromschutzvorrichtung 4 kann ein Differenzstromschutzgerät bzw. Fehlerstromschutzgerät der bekannten Bauart sein. Dabei weist die Fehlerstromschutzvorrichtung 4, wie sie exemplarisch in der Figur dargestellt ist, ein Gehäuse 2 auf. Darüber hinaus umfasst die elektrische Schutzanordnung 1 einen Leistungsschalter 3, der in einem separaten Gehäuse 15 angeordnet ist. Das Gehäuse 2 der Fehlerstromschutzvorrichtung 4 und das Gehäuse 15 des Leistungsschalters 3 können formschlüssig miteinander verbunden werden. Typischerweise sind die Fehlerstromschutzvorrichtung 4 und der Leistungsschalter 3 in Schaltschränken untergebracht, wo sie an die entsprechenden Stromschienen angeschlossen sind.

Der Leistungsschalter 3 kann auch als Hauptschalter bezeichnet werden und dient zum Schalten von Strömen und Spannungen, wie sie beispielsweise in Produktionsanlagen, Wohngebäuden und dergleichen üblich sind. Der Leistungsschalter 3 kann eine Überwachungseinrichtung umfassen. Mit dieser Überwachungseinrichtung können die Spannung und der Stromstärke in den elektrischen Leitungen erfasst werden. Aus der Spannung und/oder der Stromstäke kann ermittelt werden, ob ein Überstrom oder ein Kurzschluss vorliegt.

Die Fehlerstromschutzvorrichtung 4 umfasst eine Detektionseinrichtung 16. Bei dieser Detektionseinrichtung 16 handelt es sich um ein Gerät, das in der Lage ist, einen Fehlerstrom oder einen Differenzstrom in einem Netz zu detektieren. Die Leistungsanschlüsse der Detektionseinrichtung 16 und des Leistungsschalters 3 sind in der Figur der Übersicht halber nicht dargestellt. Typischerweise werden die Leistungsanschlüsse, z.B. eine Phase und ein Nullleiter oder drei Phasen und ein Nullleiter, zunächst durch die Detektionseinrichtung 16, dann von dort über Stromschienen in den Leistungsschalter 3 und von dort schließlich wieder nach außen geführt.

Bei der Detektionseinrichtung 16 handelt es sich beispielsweise um ein Differenzstromschutzgerät oder ein Fehlerstromschutzgerät. Die Detektionseinrichtung 16 umfasst einen Summenstromwandler 18, dessen Ausgangssignal von null verschieden ist, wenn ein Fehlerstrom oder Differenzstrom vorliegt. Das Ausgangsignal des Summenstromwandlers 18 wird einer Recheneinheit 17 zugeführt. Dort wird das Ausgangssignal mit einem Schwellenwert verglichen. Falls der Schwellenwert überschritten wird, kann der Leistungsschalters 3 ausgelöst werden.

Im Beispiel der Figur besitzt die Detektionseinrichtung 16 eine Anschlusseinrichtung 5. Über zwei Ausgangsklemmen 6 steuert die Detektionseinrichtung 16 eine Auslöseeinrichtung 7 an. Hierfür leiten beispielsweise Kabel 8 das Ausgangssignal von den Ausgangsklemmen 6 zu der Auslöseeinrichtung 7. Gegebenenfalls erfolgt die Signalübertragung auch über Stromschienen oder dergleichen. Das Ausgangssignal hängt in jedem Fall davon ab, ob ein Fehlerstrom oder Differenzstrom detektiert wurde.

Die Auslöseeinrichtung 7 ist beispielsweise als Spannungsauslöser oder als Unterspannungsauslöser realisiert. Im Falle eines Spannungsauslösers erfolgt das Auslösen, falls das Ausgangssignal von der Detektionseinrichtung 16 eine Spannungsschwelle überschreitet. Im Falle eines Unterspannungsauslösers erfolgt das Auslösen, wenn die Ausgangsspannung von der Detektionseinrichtung 16 eine Spannungsschwelle unterschreitet. In der Regel wird der (Unter-)spannungsauslöser magnetisch realisiert, weswegen er auch als Auslösemagnet bezeichnet werden kann. Im Wesentlichen soll er einen Schaltvorgang des Leistungsschalters 3 auslösen. Dazu greift er typischerweise in eine Schaltschlossmechanik des Leistungsschalters 3 ein. Mit einer Handhabe 9 ist der Leistungsschalter 3 manuell schaltbar. Die Auslöseeinrichtung 7 greift über eine geeignete Mechanik auf die Handhabe 9 oder direkt auf das Schaltschloss des Leistungsschalters 3 beispielsweise mithilfe eines Stößels zu.

In dem vorliegenden Beispiel sind innerhalb des Gehäuses 15 des Leistungsschalters 3 drei Zubehörtaschen 10, 11 und 12 vorgesehen. Die mittlere Zubehörtasche 11 ist mit der Auslöseeinrichtung 7 besetzt, da sie unmittelbar an die Handhabe 9 angrenzt. Die Zubehörtaschen 10 und 12 sind hier nicht besetzt und bieten Platz für weiteres internes Zubehör wie Hilfs- oder Alarmschalter.

Ist die elektrische Schutzanordnung 1 nur mit den oben genannten Komponenten ausgestattet, so wird der Hilfsauslöser, d. h. die in die Zubehörtasche 11 eingesteckte, modulare Auslöseeinrichtung 7, alleine für die Auslösung des Leistungsschalters 3 im Zusammenhang mit der Fehler- bzw. Differenzstromfunktionalität genutzt. Er bedient sich der gleichen Schnittstelle wie ein herkömmlicher Spannungsauslöser. Bei dieser baulichen Lösung kann also kein weiterer Auslösemagnet bzw. Hilfsauslöser (ob Spannungsauslöser oder Unterspannungsauslöser) in die Fehlerstromschutzvorrichtung eingebaut werden, um beispielsweise den Leistungsschalter zu testen. Es ist jedoch üblich, dass man aus der Ferne den Leistungsschalter über einen Auslösemagneten (Spannungsauslöser oder Unterspannungsauslöser) auslösen möchte. Dies ist bei der bekannten Bauart von elektrischen Schutzanordnungen 1, die unter Zuhilfenahme eines Auslösemagneten 7 in einer Zubehörtasche 11 des Kompaktleistungsschalters bzw. der Fehlerstromschutzvorrichtung 3 diesen/diese auslösen, nicht möglich.

Erfindungsgemäß ist daher eine an die Auslöseeinrichtung 7 angeschlossene Anschlusseinrichtung 5 vorgesehen, an die auch eine Schalteinrichtung 13 angeschlossen werden kann. Die Anschlusseinrichtung 5 ist hier beispielsweise in die Fehlerstromschutzvorrichtung 4 integriert. Sie besitzt neben den Ausgangsklemmen 6 im vorliegenden Beispiel mindestens zwei Eingangsklemmen 14. An diese Eingangsklemmen 14 ist als Schalteinrichtung 13 ein Taster angeschlossen. Die Schalteinrichtung 13 kann aber auch durch andere Schalter, wie beispielsweise einen Öffner, realisiert sein. Neben einfachen manuellen Schaltern können auch beispielsweise ferngesteuerte Schalter und dergleichen eingesetzt werden.

In dem konkreten Ausführungsbeispiel hier erzeugt die Detektionseinrichtung 16 an einer der Eingangsklemmen 14 dauerhaft ein vorbestimmtes Potenzial, z. B. ein Niederspannungspotenzial von 18 V. Bei offenem Taster, also geöffneter Schalteinrichtung 13, liegt dann zwischen den beiden Eingangsklemmen 14 dauerhaft eine entsprechende Potenzialdifferenz an, welche zum Ansteuern der Auslöseeinrichtung 7 genutzt werden kann. Falls nun der Taster gedrückt bzw. die Schalteinrichtung 13 geschlossen wird, wird der Stromkreis geschlossen und der Auslösemagnet (Auslöseeinrichtung 7) aktiviert. Demzufolge wird das Schaltschloss im Leistungsschalter 3 ausgelöst und dieser schaltet ab.

Neben der Nutzung der Auslöseeinrichtung 7 durch das Differenzstromgerät bzw. die Detektionseinrichtung 4 kann mit dieser Erfindung über einen so genannten "potenzialfreien Kontakt" (hier Taster) auf die Auslöseeinrichtung 7 auch von extern über zwei Kontakte bzw. die Anschlusseinrichtung 5 zugegriffen werden. Die Auslöseeinrichtung 7 der Fehlerstromschutzvorrichtung 4 wird also als Spannungsauslöser genutzt, und es ist so möglich, den Leistungsschalter 3 von der Ferne auszuschalten.

Eine externe Auslösung des Kompaktleistungsschalters oder Lasttrennschalters (d. h. des Leistungsschalters 3) über die Auslöseeinrichtung 7 hat somit keinen Einfluss auf die Fehlerstromerfassungsvorrichtung 4. Das bedeutet, dass sowohl die Auslöseanzeige, die typischerweise den Fehlerstromfall anzeigt, als auch eventuell vorhandene Hilfskontakte, z. B. für Leuchtmelder, in diesem Fall nicht aktiviert werden, da das Auslösen ja nicht durch einen Fehler- bzw. Differenzstrom erfolgt.

Als Variante kann die Anschlusseinrichtung 5 auch getrennt von der Detektionseinrichtung 4 vorgesehen sein. Gegebenenfalls verfügt sie auch über eigene Elektronik.

In vorteilhafter Weise dient die vorhandene Auslöseeinrichtung 7 damit als Fehler- bzw. Differenzstromauslöser im Fehlerfall und gleichzeitig zum elektrischen oder manuellen Auslösen des Leistungsschalters aus der Ferne. Damit ist keine separate Zubehörtasche (Pocket) für einen zusätzlichen Auslösemagneten, der das externe Auslösen unterstützt, notwendig. Vielmehr bleibt Platz für weiteres internes Zubehör, wie Hilfs- und Alarmschalter.

### Bezugszeichenliste

- 1: Elektrische Schutzanordnung
- 2: Gehäuse
- 3: Leistungsschalter
- 4: Fehlerstromschutzvorrichtung
- 5: Anschlusseinrichtung
- 6: Ausgangsklemmen
- 7: Auslöseeinrichtung
- 8: Kabel
- 9: Handhabe
- 10: Zubehörtasche
- 11: Zubehörtasche
- 12: Zubehörtasche
- 13: Schalteinrichtung
- 14: Eingangsklemmen
- 15: Gehäuse
- 16: Detektionseinrichtung
- 17: Recheneinheit
- 18: Summenstromwandler

## Patentansprüche

1. Elektrische Schutzanordnung (1) mit
- einer Fehlerstromschutzvorrichtung (4) zum Anschluss an einen Leistungsschalter (3) oder ein Lasttrennschalter und mit
- einem Leistungsschalter (3), wobei die Fehlerstromschutzvorrichtung (4) aufweist:
- eine Detektionseinrichtung (16) zum Detektieren eines Fehlerstroms,
- eine Auslöseeinrichtung (7), die von der Detektionseinrichtung (16) ansteuerbar ist, wobei der Leistungsschalters (3) in Folge der Ansteuerung durch die Auslöseeinrichtung (7) auslöst, und
- eine Anschlusseinrichtung (5), die an der Auslöseeinrichtung (7) angeschlossen ist, zum Anschluss einer Schalteinrichtung (13), wobei
- die Detektionseinrichtung (16) und die Auslöseeinrichtung (7) so ausgebildet sind, dass die Auslöseeinrichtung (7) über die Anschlusseinrichtung (5) von der Schalteinrichtung (13) unabhängig von der Detektionseinrichtung (4) auslösbar ist, sowieein Gehäuse (2), in dem die Detektionseinrichtung (16) zusammen mit der Anschlusseinrichtung (5) fest angeordnet sind, wobei
- die Schalteinrichtung (13) in Bezug auf das Gehäuse (2) extern angeordnet und an die Anschlusseinrichtung (5) angeschlossen ist,
- der Leistungsschalter (3) in einem separaten Gehäuse (15) angeordnet ist, das mit dem Gehäuse (2) der Fehlerstromschutzvorrichtung (4) formschlüssig verbindbar ist,
- das Gehäuse (15) des Leistungsschalters (3) einen Schacht (10, 11, 12), in dem die Auslöseeinrichtung (7) befestigt ist, aufweist, und
- die Auslöseeinrichtung (7) als ein in das Gehäuse (15) des Leistungsschalters (3) einsteckbares Modul ausgebildet ist.

2. Elektrische Schutzanordnung (1) nach Anspruch 1, wobei die Anschlusseinrichtung (5) fest in das Gehäuse (2) der Fehlerstromschutzvorrichtung (4) integriert ist.

3. Elektrische Schutzanordnung (1) nach einem der vorhergehenden Ansprüche, wobei die Anschlusseinrichtung (5) zwei Anschlüsse (14) umfasst, zwischen denen im Betriebsfall ständig eine vorgegebene Spannung anliegt.

4. Elektrische Schutzanordnung (1) nach Anspruch 3, wobei die Detektionseinrichtung (4) und die Auslöseeinrichtung (7) so ausgebildet sind, dass die Auslöseeinrichtung (7) durch Kurzschluss der Anschlüsse der Anschlusseinrichtung (5) ausgelöst wird.

5. Elektrische Schutzanordnung (1) nach einem der vorhergehenden Ansprüche, wobei die Auslöseeinrichtung (7) als Spannungsauslöser ausgebildet ist.

6. Elektrische Schutzanordnung (1) nach einem der vorhergehenden Ansprüche, wobei die Auslöseeinrichtung (7) mit Kabeln (8) an die Anschlusseinrichtung (5) angeschlossen ist.

## Claims

1. Electrical protection arrangement (1) comprising
- a residual current protection device (4) for connection to a circuit breaker (3) or a load break switch and comprising
- a circuit breaker (3), wherein the residual current protection device (4) has:
- a detection device (16) for detecting a residual current,
- a tripping device (7), which is actuable by the detection device (16), wherein the circuit breaker (3) trips as a result of actuation by the tripping device (7), and
- a connection device (5), which is connected to the tripping device (7), for connecting a switching device (13), wherein
- the detection device (16) and the tripping device (7) are designed in such a way that the tripping device (7) is trippable via the connection device (5) by the switching device (13) independently of the detection device (4), and also a housing (2), in which the detection device (16) together with the connection device (5) are arranged permanently, wherein
- the switching device (13) is arranged externally with respect to the housing (2) and is connected to the connection device (5),
- the circuit breaker (3) is arranged in a separate housing (15), which is connectable in form-fitting manner to the housing (2) of the residual current protection device (4),
- the housing (15) of the circuit breaker (3) has a shaft (10, 11, 12), in which the tripping device (7) is fastened, and
- the tripping device (7) is in the form of a module which can be plugged into the housing (15) of the circuit breaker (3).

2. Electrical protection arrangement (1) according to Claim 1, wherein the connection device (5) is integrated permanently in the housing (2) of the residual current protection device (4).

3. Electrical protection arrangement (1) according to one of the preceding claims, wherein the connection device (5) comprises two connections (14), between which a preset voltage is constantly present during operation.

4. Electrical protection arrangement (1) according to Claim 3, wherein the detection device (4) and the tripping device (7) are designed in such a way that the tripping device (7) is tripped by a short circuit of the connections of the connection device (5).

5. Electrical protection arrangement (1) according to one of the preceding claims, wherein the tripping device (7) is in the form of a voltage release.

6. Electrical protection arrangement (1) according to one of the preceding claims, wherein the tripping device (7) is connected by cables (8) to the connection device (5).

## Revendications

1. Système de protection électrique (1) avec
- un dispositif de protection contre le courant de fuite (4) destiné à être raccordé à un commutateur de puissance (3) ou un commutateur de séparation de charge et avec
- un commutateur de puissance (3), dans lequel le dispositif de protection contre le courant de fuite (4) présente :
- un dispositif de détection (16) destiné à détecter un courant de fuite,
- un dispositif de déclenchement (7) qui peut être commandé par le dispositif de détection (16), dans lequel le commutateur de puissance (3) se déclenche à la suite de la commande par le biais du dispositif de déclenchement (7), et
- un dispositif de raccordement (5) qui est raccordé au dispositif de déclenchement (7), destiné à être raccordé à un dispositif de commutation (13), dans lequel
- le dispositif de détection (16) et le dispositif de déclenchement (7) sont configurés de sorte que le dispositif de déclenchement (7) peut être déclenché via le dispositif de raccordement (5) par le dispositif de commutation (13) indépendamment du dispositif de détection (4), ainsi qu'un logement (2), dans lequel le dispositif de détection (16) est disposé à demeure conjointement avec le dispositif de raccordement (5), dans lequel
- le dispositif de commutation (13) est disposé à l'extérieur par rapport au logement (2) et est raccordé au dispositif de raccordement (5),
- le commutateur de puissance (3) est disposé dans un logement séparé (15) qui peut être relié par complémentarité de formes au logement (2) du dispositif de protection contre le courant de fuite (4),
- le logement (15) du commutateur de puissance (3) présente un puits (10, 11, 12) dans lequel le dispositif de déclenchement (7) est fixé, et
- le dispositif de déclenchement (7) est configuré en tant que module enfichable dans le logement (15) du commutateur de puissance (3).

2. Système de protection électrique (1) selon la revendication 1, dans lequel le dispositif de raccordement (5) est intégré à demeure dans le logement (2) du dispositif de protection contre le courant de fuite (4).

3. Système de protection électrique (1) selon l'une des revendications précédentes, dans lequel le dispositif de raccordement (5) comprend deux raccordements (14) entre lesquels il y a constamment une tension prédéterminée au cours de l'exploitation.

4. Système de protection électrique (1) selon la revendication 3, dans lequel le dispositif de détection (4) et le dispositif de déclenchement (7) sont configurés de sorte que le dispositif de déclenchement (7) est déclenché par le biais d'un court-circuit des raccordements du dispositif de raccordement (5).

5. Système de protection électrique (1) selon l'une des revendications précédentes, dans lequel le dispositif de déclenchement (7) est configuré en tant que déclencheur de tension.

6. Système de protection électrique (1) selon l'une des revendications précédentes, dans lequel le dispositif de déclenchement (7) est raccordé au dispositif de raccordement (5) avec des câbles (8).
